# EUROPEAN PATENT APPLICATION

(11) **EP 4 276 155 A1**
(43) Date of publication of application: **15.11.2023**
(21) Application number: 22172824.9
(22) Date of filing: 11.05.2022
(51) Int. Cl.: C09J 5/00, C09J 7/30

(54) **MULTILAYERED TAPE AND PROCESS FOR DEBONDING THE MULTILAYERED TAPE**

(71) Applicant: tesa SE, 22848 Norderstedt (DE)
(72) Inventor: WANG, Shuang, 20255 Hamburg (DE)
(74) Representative: tesa SE

(57) **Abstract**

The present invention relates to a multilayered tape, comprising at least a layer sequence: (a₁) a blowing agent-containing adhesive layer; (bi) a laser-translucent adhesive layer; (c) a laser-debondable layer comprising a laser-sensitive material selected from the group consisting of a metal, a metal oxide, carbon black and a radiation-curable lacquer; and (b₂) a laser-translucent adhesive layer. Further, the present invention relates to the process for debonding said multilayered tape. Furthermore, the present invention relates to the use of said multilayered tape in electronic devices, automotive devices, medical devices and dentistry devices.

## Description

### TECHNICAL FIELD

The present invention relates to a multilayered tape and to a multilayered assembly comprising said multilayered tape. Further, the present invention relates to a process for debonding said multilayered tape in said multilayered assembly. In addition thereto, the present invention relates to a use of said multilayered tape in electronic devices, automotive devices, medical devices and dentistry devices.

### INTRODUCTION

The ability to separate adhesive bonded assemblies without causing damage to the substrates is very desirable. There are many applications such as in electronic devices, automotive devices, medical devices, dentistry devices and general manufacturing where the opportunity to separate assemblies is important. This may be for repositioning in manufacturing, repair in service or recovery of materials at end-of-life. Various methods for adhesive reversibility or debonding have been proposed over the last 40 years but there currently exist no universally accepted solutions for debond-on-demand bonded applications. For example C. Sato in Recyicling and environmental aspects, 2011, 58, pages 1506-1526 describes several kinds of methods including infrared, induction, and microwave heating for debonding adhesively bonded adherents.

However, one of the major challenges for these adhesives is that the adhesively bonded joints are not easy to separate if they are bonded with strong adhesives or the bonded area is large without damaging the adherent.

Thus, there remains a need for a multilayered tape having unique properties, in particular relative to their use in electronic devices, automotive devices, medical devices and dentistry devices.

### DETAILED DESCRIPTION

It was therefore the object of the present invention to provide a new multilayered tape which would be easily separated from adhesively bonded adherents without damaging the adhesively bonded adherent. This object is addressed by the inventive multilayered tape having the features of the independent claims. Preferred embodiments, which can be implemented individually or in combination, are presented in the description and the dependent claims. In particular, it has unexpectedly found that such multilayered tape be debondable especially to clean the residue from each side of a substrate at the Mpa bonding strength level.

Therefore, the present invention relates to a multilayered tape, comprising at least a layer sequence:
(a₁) a blowing agent-containing adhesive layer;
(b₁) a laser-translucent adhesive layer;
(c) a laser-debondable layer comprising a laser-sensitive material selected from the group consisting of a metal, a metal oxide, carbon black and a radiation-curable lacquer; and
(b₂) a laser-translucent adhesive layer.

According to a further alternative, it is preferred that the multilayered tape comprises at least a layer sequence:
(a₁) a blowing agent-containing adhesive layer;
(b₁) a laser-translucent adhesive layer;
(c) a laser-debondable layer comprising a laser-sensitive material selected from the group consisting of a metal, a metal oxide, carbon black and a radiation-curable lacquer;
(b₂) a laser-translucent adhesive layer; and
(a₂) a blowing agent containing adhesive layer.

It is further preferred that the blowing agent-containing adhesive layer according to (a₁) and/or (a₂) comprises a polymer compound, preferably wherein the polymer compound is a pressure-sensitive adhesive, more preferably the polymer compound is selected from the group consisting of poly(meth)acrylate, polyurethane, natural rubber, synthetic rubber and silicone, preferably poly(meth)acrylate and polyurethane, more preferably poly(meth)acrylate.

All pressure-sensitive adhesives known to those skilled in the art can be used as the pressure-sensitive adhesive for the blowing agent-containing adhesive layer according to (a₁) and/or (a₂), for example those based on acrylates and/or methacrylates, polyurethanes, natural rubbers, synthetic rubbers, styrene block copolymers with an elastomer block made of unsaturated or hydrogenated polydiene blocks (polybutadiene, polyisoprene, copolymers of both as well as other elastomer blocks familiar to the person skilled in the art), polyolefins, fluoropolymers and/or silicones. This also includes other adhesives that have pressure-sensitive adhesive properties in accordance with the "Handbook of Pressure Sensitive Adhesive Technology" by Donatas Satas (Satas & Associates, Warwick 1999).

Preferably, the blowing agent-containing adhesive layer according to (a₁) and/or (a₂) is obtainable or obtained by crosslinking a (meth)acrylate with an acrylamide, preferably by crosslinking a n-butyl acrylate with a N-vinylcaprolactam to obtain acopolymer. The copolymer can be prepared in a solvent mixture of ethyl acetate/isopropyl alcohol (168/1) by means of free-radical polymerization in a manner known to those skilled in the art.

Further, it is preferred that the blowing agent-containing adhesive layer according to (a₁) and/or (a₂) comprises a blowing agent, preferably wherein the blowing agent is selected from the group consisting of a diazene compound, preferably azodicarbonamide; a hydrazine compound, preferably p-toluenesulfonyl hydrazide and 4,4'-oxybis(benzenesulfonylhydrazid); a sulfonyl semicarbazide compound, preferably p-toluenesulfonyl semicarbazide; a tetrazole compound, preferably 5-phenyl-1H-tetrazole; a carbonate compound, preferably sodium hydrogencarbonate and zinc carbonate and a microsphere, preferably a heat-expandable microsphere.

The heat-expandable microspheres comprising a thermoplastic polymer shell and a propellant entrapped therein are commercially available, for example, under the EXPANCEL^{®} trademark. In such microspheres, the propellant is typically a liquid with a boiling point no higher than the softening temperature of the thermoplastic polymer shell. The softening temperature of the polymer shell, normally corresponding to its glass transition temperature T_{g}, is preferably within the range of 0 to 140°C, more preferably 30 to 100°C. When heated, the propellant evaporates, thereby increasing the internal pressure, and at the same time the shell softens, which leads to a significant increase in the size of the microspheres. The temperature at which expansion starts is called Tₛₜₐᵣₜ, while the temperature at which maximum expansion is reached is called Tₘₐₓ. Tₛₜₐᵣₜ for the expandable microspheres is preferably from 40 to 140°C, most preferably from 50 to 100<°C. Tₘₐₓ of the expandable microspheres is higher than Tₛₜₐᵣₜ and preferably from 80 to 200°C, most preferably from 100 to 170°C.

The blowing agent-containing adhesive layer according to (a₁) and/or (a₂) preferably contains microspheres, which, in the unexpanded state at 25° C have an average diameter of 3 µm to 30 µm, in particular 5 µm to 20 µm, and/or after expansion an average diameter of 10 µm to 200 µm, in particular from 15 µm to 90 µm. The mean diameter of the non-expanded microspheres is preferably below the layer thickness of the blowing agent-containing adhesive layer according to (a₁) and/or (a₂).

With respect to the laser-translucent adhesive layer according to (b₁) and/or (b₂) it is preferred that the laser-translucent adhesive layer according to (b₁) and/or (b₂) comprises a pressure sensitive adhesive composition, preferably wherein the laser-translucent adhesive layer according to (b₁) and/or (b₂) comprises at least 40 weight-% of a poly(meth)acrylate based on 100 weight-% of the pressure sensitive adhesive composition.

The laser-translucent adhesive layer according to (b₁) and/or (b₂) preferably comprise at least one polymer selected from the group consisting of poly(meth)acrylates, natural rubber, synthetic rubbers, here in particular vinylaromatic block copolymers, silicones, polyurethanes and mixtures of two or more of the polymers listed above. The laser-translucent adhesive layer according to (b₁) and/or (b₂) more preferably comprises at least one poly(meth)acrylate. In particular, the laser-translucent adhesive layer according to (b₁) and/or (b₂) contains no further polymers apart from one or more poly(meth)acrylates.

It is further preferred that the laser-translucent adhesive layer according to (b₁) and/or (b₂) comprises at least the following two components:
- from 60% to 90% by weight, preferably from 65% to 80% by weight, of an adhesive of a first polymer component based on polyacrylate; and
- 10% by weight to 40% by weight, preferably 15% by weight to 30% by weight, of an adhesive composition of a second elastomer-based polymer component which is essentially immiscible with the polyacrylate component, more preferably is a synthetic rubber.

It is preferred that the laser-translucent adhesive layer according to (b₁) and/or (b₂) comprises a heat-activated adhesive composition. It is further preferred that the laser-translucent adhesive layer according to (b₁) and/or (b₂) is commercially available under the trade name tesa HAF^{®} 8474, which is a reactive heat activated structural bonding film based on phenolic resin and nitrile rubber. This amber double sided tape has no backing. It is protected by a strong paper liner.

It is preferred that the laser-translucent adhesive layer according to (b₁) and/or (b₂) comprises a heat-activated adhesive composition which is disclosed and described in detail in WO 2013/174650 A1.

Further, it is preferred that the heat-activated adhesive composition comprises 30 to 75 weight-% epoxy resin and 25 to 70 weight-% nitrile rubber based on 100 weight-% of the heat-activated adhesive composition.

The nitrile rubber preferably comprises an acrylonitrile content of 15 to 45 weight-%. It is preferred that the nitrile rubber has a Mooney viscosity below 100 (Mooney ML 1+4 at 100 °C; corresponding to DIN 53523). Commercial examples of such nitrile rubbers are, for example, Nipol^{™} N917 from Zeon Chemicals. It is further preferred that the epoxy resin are short- to medium-chain oligomers or polymeric compounds, in particular with average molecular weights in the range of up to 10,000 g/mol. The proportion of epoxy resin in the heat-activated adhesive composition is preferably between 75 and 30 weight-%. The weight average molecular weight Mw of the epoxy resin varies from 100 g/mol up to a maximum of 10,000 g/mol for polymeric epoxy resins. The epoxy resin include, for example, the reaction product of bisphenol A and epichlorohydrin, epichlorohydrin, glycidyl ester, the reaction product of epichlorohydrin and p-aminophenol.

It is preferred that the epoxy resin is selected from the group consisting of epichlorohydrin and glycidyl ester.

Preferred commercial examples of the epoxy resin are e.g. Araldite^{™} 6010, CY-281^{™}, ECN^{™} 1273, ECN^{™} 1280, MY 720, RD-2 from Ciba Geigy, DER^{™} 331, DER^{™} 732, DER^{™} 736, DEN^{™} 432, DEN^{™} 438, DEN^{™} 485 from Dow Chemical, Epon^{™} 812, 825, 826, 828, 830, 834, 836, 871, 872,1001, 1004, 1031 etc. from Shell Chemical and HPT^{™} 1071, HPT^{™} 1079 also from Shell Chemical.

Examples of commercial aliphatic epoxy resins are vinylcyclohexane dioxides such as ERL-4206, ERL-4221, ERL 4201, ERL-4289 or ERL-0400 from Union Carbide Corp.

Examples of novolak resins that can be used are Epi-Rez^{™} 5132 from Celanese, ESCN-001 from Sumitomo Chemical, CY-281 from Ciba Geigy, DEN^{™} 431, DEN^{™} 438, Quatrex 5010 from Dow Chemical, RE 305S from Nippon Kayaku , Epiclon^{™} N673 from DaiNipon Ink Chemistry or Epicote^{™} 152 from Shell Chemical.

Furthermore, melamine resins such as Cymel^{™} 327 and 323 from Cytec can also be used as the heat-activated adhesive composition.

For example, novolak resins, phenolic resole resins or combinations of novolak resins and phenolic resins are suitable. Examples of commercially available phenolic resins are YP 50 from Toto Kasei, PKHC from Union Carbide Corp. and BKR 2620 from Showa Union Gosei Corp.

Terpene-phenolic resins such as NIREZ^{™} 2019 from Arizona Chemical can also be used as reactive resins.

Furthermore, polyisocyanates such as Coronate^{™} L from Nippon Polyurethane Ind., Desmodur^{™} N3300 or Mondur^{™} 489 from Bayer can also be used as reactive resins.

It is further preferred that the heat-activated adhesive composition comprises adhesive-increasing (tackifying) resins in a proportion of up to 30 weight-% by weight, based on the total mixture of the heat-activated adhesive composition. All known tackifying resins described in the literature can be used without exception as the tackifying resins to be added. The pinene, indene and colophony resins, their disproportionated, hydrogenated, polymerized, esterified derivatives and salts, the aliphatic and aromatic hydrocarbon resins, terpene resins and terpene-phenolic resins as well as C5-, C9- and other hydrocarbon resins. Any combination of these and other resins can be used in order to set the properties of the resulting heat-activated adhesive composition as desired. In general, all (soluble) resins compatible with the nitrile rubber can be used, in particular all aliphatic, aromatic, alkylaromatic hydrocarbon resins, hydrocarbon resins based on pure monomers, hydrogenated hydrocarbon resins, functional hydrocarbon resins and natural resins. Reference is expressly made to the presentation of the state of knowledge in the "Handbook of Pressure Sensitive Adhesive Technology" by Donatas Satas (van Nostrand, 1989). In order to accelerate the reaction between the two components, optional crosslinkers and accelerators can also be added to the mixture. Examples of suitable accelerators are imidazoles commercially available under 2M7, 2E4MN, 2PZ-CN, 2PZ-CNS, P0505, L07N from Shikoku Chem. or Curezol 2MZ from Air Products. HMTA (hexamethylenetetramine) additives are also suitable as crosslinking agents. Furthermore, amines, in particular tertiary amines, can also be used for acceleration. In addition to reactive resins, plasticizers can also be used.

In a preferred embodiment of the invention, plasticizers based on polyglycol ethers, polyethylene oxides, phosphate esters, aliphatic carboxylic acid esters and benzoic acid esters can be used here. Furthermore, aromatic carboxylic acid esters, higher molecular weight diols, sulfonamides and adipic acid esters can also be used. In a further preferred embodiment, further additives are added to the blend, such as polyvinyl formal, polyacrylate rubbers, chloroprene rubbers, ethylene-propylene-diene rubbers, methyl-vinyl-silicone rubbers, fluorosilicone rubbers, tetrafluoroethylene-propylene copolymer rubbers, butyl rubbers, styrene-butadiene rubbers. Polyvinyl butyrals are available under Solutia's Butvar^{™}, Wacker's Pioloform^{™} and Kuraray's Mowital^{™}. Polyacrylate rubbers are available from Zeon under the name Nipol AR^{™}. Chloroprene rubbers are available under Baypren^{™} from Bayer. Ethylene-propylene-diene rubbers are available under Keltan^{™} from DSM, under Vistalon^{™} from Exxon Mobile and under Buna EP^{™} from Bayer. Methyl vinyl silicone rubbers are available under Dow Corning's Silastic^{™} and GE Silicones' Silopren^{™}. Fluorosilicone rubbers are available under the Silastic^{™} brand from GE Silicones. Butyl rubbers are available from Exxon Mobile under the name Esso Butyl^{™}. Styrene-butadiene rubbers are available under Bayer's Buna S^{™}, and Eni Chem's Europrene^{™} and Bayer's Polysar S^{™}. Polyvinyl formals are available under Formvar^{™} from Ladd Research.

It is further preferred that the laser-translucent adhesive layer according to (b₁) and/or (b₂) comprises a heat-activated adhesive composition which is disclosed and described in detail in WO 2010/245945 A1. It is preferred that the heat-activated adhesive composition comprises nitrile rubber and novolak resin.

Furthermore, it is preferred that the heat-activated adhesive composition comprises 20 to 70 weight-% phenolic resin and 30 to 80 weigh-% nitrile rubber based on 100 weight-% of the heat-activated adhesive composition.

It is preferred that the heat-activated adhesive composition comprises acrylonitrile-butadiene copolymers and novolak resins. The ratio of the acrylonitrile-butadiene copolymers to the novolak resin is preferably in the range from 3:7 to 8:2. The novolak resin is capable chemically crosslinking at high temperatures in the presence of a hardener. Crosslinking takes place in particular solely by chemical reaction of the novolak resins with the hardener by heating. The activation temperatures for the thermal crosslinking are well above room temperature, usually at least 100 °C. or more. Preferred activation temperatures for thermal crosslinking, in particular to guarantee the required bond strength, are at least 120 °C., in particular between 140 °C and 220 °C.

In particular, all acrylonitrile-butadiene rubbers with an acrylonitrile content of 15 to 55 weight-% can be used as acrylonitrile-butadiene copolymers. Copolymers of acrylonitrile-butadiene and isoprene can also be used. The proportion of 1,2-linked butadiene is variable. The foregoing polymers may be hydrogenated to varying degrees; fully hydrogenated polymers with a proportion of double bonds of less than 1% can also be used. Such rubbers are commercially available, for example, under the name Europrene^{™} from Eni Chem, Krynac^{™} and Perbunan^{™} from Bayer or Nipol and Breon from Zeon, hydrogenated systems are available under the name Zetpol from Zeon or under Therban commercially available in different grades from Lanxess.

The nitrile rubbers can be dissolved or suspended in short-chain alcohols and ketones such as ethanol or butanone. Butanone is preferred here, since the remaining components, especially the novolak resins, can be better dissolved in butanone.

Novolaks are soluble, meltable, non-self-curing and storage-stable phenolic resins. They are produced by condensing formaldehyde and excess phenol in the presence of acidic catalysts. They are crosslinked to duroplastic molded parts with the help of a hardener that splits off formaldehyde, e.g. hexamethylenetetramine (urotropine). Because of the steric hindrance, this crosslinking proceeds faster in the para position than in the ortho position. For this reason, preference is given to using novolak resins which contain phenol units linked to one another in the ortho position for particularly rapid crosslinking.

Examples of novolak resins are, for example, Sumitomo Bakelite's Durez products and/or Plastics Engineering Company's Plenco products.

Various formaldehyde donors can be used as hardeners, such as hexmethylenetetramine (Hexa, HMTA, Urotropin) and/or various methylolamine derivatives such as trimethylolmelamine or hexamethylolmelamine. The chemical crosslinking of the hardeners with the novolak resins results in very high strength within the adhesive film. But the bond strengths to the polyimide are also extremely high.

In order to increase the adhesion, the addition of adhesive resins ("tackifiers") that are compatible with the elastomers is also possible in an advantageous procedure. Tackifiers that can be used in the heat-activatable adhesives include, for example, non-hydrogenated, partially or fully hydrogenated resins based on colophony and colophony derivatives, hydrogenated polymers of dicyclopentadiene, non-hydrogenated, partially, selectively or fully hydrogenated hydrocarbon resins based on C5-, C5/C9- or C9-monomer streams, polyterpene resins based on α-pinene and/or β-pinene and/or δ-limonene, hydrogenated polymers of preferably pure C8- and C9-aromatics are used. The aforementioned adhesive resins can be used either alone or in a mixture. Advantageously up to 20 weight-% of the tackifiers based on the adhesive, can be added. Both monomeric and oligomeric compounds with more than one epoxy group per molecule are understood to be epoxy resins. These can be reaction products of glycidic esters or epichlorohydrin with bisphenol A or bisphenol F or mixtures of these two.

Epoxy novolak resins obtained by reacting epichlorohydrin with the reaction product of phenols and formaldehyde can also be used. Monomeric compounds with several epoxy end groups, which are used as diluents for epoxy resins, can also be used. Elastically modified epoxy resins can also be used. Examples of epoxy resins that can be used advantageously are Araldite^{™} 6010, CY-281^{™}, ECN^{™} 1273, ECN^{™} 1280, MY 720, RD-2 from Ciba Geigy, DER^{™} 331, 732, 736, DEN^{™} 432 from Dow Chemicals, Epon^{™} 812, 825, 826, 828 , 830 etc. from Shell Chemicals, HPT^{™} 1071, 1079 also from Shell Chemicals, Bakelite^{™} EPR 161, 166, 172, 191, 194 etc. from Bakelite AG. Commercial aliphatic epoxy resins that can be used advantageously are, for example, vinylcyclohexane dioxides such as ERL-4206, 4221, 4201, 4289 or 0400 from Union Carbide Corp.

Advantageously usable elasticized epoxy resins are available from Noveon under the name Hycar. Advantageously usable epoxide thinners, monomeric compounds with several epoxide groups are for example BakeliteTM EPD KR, EPD Z8, EPD HD, EPD WF, etc. from Bakelite AG or PolypoxTM R 9, R12, R 15, R 19, R 20 etc. from UCCP.

The following additives can be additionally used: primary antioxidants such as sterically hindered phenols, secondary antioxidants such as phosphites or thioethers, other antioxidants such as sterically hindered amines, process stabilizers such as C radical scavengers, light stabilizers such as UV absorbers, Processing aids, fillers such as silicon dioxide, glass (ground or in the form of beads), aluminum oxide, zinc oxide, titanium dioxide, carbon black, metal powder, etc., color pigments and dyes as well as optical brighteners, optionally other polymers, preferably of an elastomeric nature. The aforementioned additives and, if appropriate, further additives can be used alone or in combination with one another. The elasticity of the adhesive can be increased by using plasticizers. For example, low molecular weight polyisoprenes, polybutadienes, polyisobutylenes or polyethylene glycols and polypropylene glycols can be used as plasticizers.

It is further preferred that the phenolic resin comprises phenol and formaldehyde.

It is preferred that the laser-debondable layer according to (c) is disclosed and described in detail in DE 102020209557 A1.

With respect to the laser-debondable layer according to (c), it is preferred that the laser-sensitive material comprises a metal, preferably wherein the metal is selected from the group consisting of Al, Cu, Ag, Au, Pt, Pd, Zn, Cr and Ti, preferably Al, Cu and Ti, more preferably Al.

It is further preferred that the laser-sensitive material comprises a metal oxide, preferably wherein the metal oxide is selected from the group consisting of silicon dioxide, titanium dioxide and tin-zinc oxide, preferably titanium dioxide.

It is furthermore preferred that the laser-sensitive material comprises carbon black.

It is preferred that the laser-sensitive material comprises a radiation-curable lacquer, preferably wherein the radiation-curable lacquer comprises a urethane acrylate.

It is further preferred that the urethane acrylate comprises a di- or higher-functional urethane acrylate oligomer, more preferably the di- or higher-functional urethane acrylate oligomer comprises
(I) 40 to 90 weight-% of a di- or higher-functional urethane acrylate oligomer A;
(II) 5 to 20 weight-% of a di- or higher-functional acrylic monomer B; and
(III) 5 to 20 weight-% of a di-functional ethylene glycol monomer C.

It is preferred that the di- or higher-functional urethane acrylate oligomer A comprises a polyurethane tri(meth)acrylate.

Further, it is preferred that, the di- or higher-functional acrylic monomer B is selected from the group consisting of a propoxylated glycerol tri(meth)acrylate, an ethoxylated glycerol tri(meth)acrylate, a propoxylated glycerol trimethylolpropane(meth)acrylate and an ethoxylated glycerol trimethylolpropane(meth)acrylate.

Further, it is preferred that the di-functional ethylene glycol monomer C is selected from the group consisting of an ethylene glycol diacrylate and a propylene glycol diacrylate, preferably the di-functional triethylene glycol monomer C comprises triethylene glycol diacrylate.

No particular restriction applies with respect to the thickness of the laser-debondable layer according to (c). It is preferred that, the laser-debondable layer according to (c) has a thickness in the rage of from 10 nm to 100 µm.

It is preferred that the laser-debondable layer according to (c) has a thickness in the rage of from 0.5 to 100 µm, preferably in the rage of from 1 to 30 µm, more preferably in the rage of from 2 to 25 µm.

Further, it is preferred that the laser-debondable layer according to (c) has a thickness in the rage of from 10 to 1000 nm, preferably in the rage of from 10 to 500 nm, more preferably 20 to 100 nm.

According to a further alternative, the multilayered tape comprises at least a layer sequence:
(a₁) a blowing agent-containing adhesive layer;
(b₁) a laser-translucent adhesive layer;
(d₁) a laser-translucent intermediate layer;
(c) a laser-debondable layer comprising a laser-sensitive material selected from the group consisting of a metal, a metal oxide, carbon black and a radiation-curable lacquer; and
(b₂) a laser-translucent adhesive layer.

According to a further alternative, the multilayered tape comprises at least a layer sequence:
(a₁) a blowing agent-containing adhesive layer;
(b₁) a laser-translucent adhesive layer;
(d₁) a laser-translucent intermediate layer;
(c) a laser-debondable layer comprising a laser-sensitive material selected from the group consisting of a metal, a metal oxide, carbon black and a radiation-curable lacquer;
(d₂) a laser-translucent intermediate layer; and
(b₂) a laser-translucent adhesive layer.

According to a further alternative, the multilayered tape comprises at least a layer sequence:
(a₁) a blowing agent-containing adhesive layer;
(b₁) a laser-translucent adhesive layer;
(d₁) a laser-translucent intermediate layer;
(c) a laser-debondable layer comprising a laser-sensitive material selected from the group consisting of a metal, a metal oxide, carbon black and a radiation-curable lacquer;
(b₂) a laser-translucent adhesive layer; and
(a₂) a blowing agent-containing adhesive layer.

According to a further alternative, the multilayered tape comprises at least a layer sequence:
(a₁) a blowing agent-containing adhesive layer;
(b₁) a laser-translucent adhesive layer;
(d₁) a laser-translucent intermediate layer;
(c) a laser-debondable layer comprising a laser-sensitive material selected from the group consisting of a metal, a metal oxide, carbon black and a radiation-curable lacquer;
(d₂) an intermediate layer;
(b₂) a laser-translucent adhesive layer; and
(a₂) a blowing agent-containing adhesive layer.

It is further preferred that the laser-translucent intermediate layer according to (d₁) and/or (d₂) comprises a polymer, wherein the polymer is selected from the group consisting of polyethylene terephthalate (PET), polyethylene (PE), polyamide (PA) or polypropylene (PP), preferably polyethylene terephthalate (PET).

It is further preferred that the multilayered tape further comprises one or more release liner(s).

Further, the present invention relates to a multilayered assembly comprising the multilayered tape according to any one of claims 1 to 28 and one or more adherent(s).

It is preferred that the one or more adherent(s) is laser-translucent.

Furthermore, the present invention relates to a process for debonding the multilayered tape according to any one of claims 1 to 28, said process comprising
- subjecting the multilayered assembly according to claim 29 or 30 to a temperature in the range of 40 to 200 °C for a period in the range of from 1 to 100 min; and/or
- subjecting the multilayered assembly according to claim 29 or 30 to a laser for a period in the range of from 0.1 s to 10 min; and
- separating the multilayered tape from the one or more adherent(s).

It is further preferred that the debonding comprises effecting an expansion of the blowing agent-containing adhesive layer according to (a₁) and/or (a₂).

It is further preferred that the debonding comprises subjecting the blowing agent-containing adhesive layer according to (a₁) and/or (a₂) to a laser, heat or plasma.

Furthermore, it is preferred that the debonding comprises effecting an oxidation and/or sublimation of the laser-debondable layer according to (c).

It is preferred that the laser is an infrared laser, preferably wherein the laser exhibits a light having a wavelength in the range of 750 nm to 1400 nm.

Further, the present invention relates to the use of the multilayered tape of any one of claims 1 to 28 in electronic devices, automotive devices, medical devices and dentistry devices.

The present invention is further illustrated by the following set of embodiments and combinations of embodiments resulting from the dependencies and back-references as indicated. In particular, it is noted that in each instance where a range of embodiments is mentioned, for example in the context of a term such as "The multilayered tape of any one of embodiments 1 to 5", every embodiment in this range is meant to be explicitly disclosed for the skilled person, i.e. the wording of this term is to be understood by the skilled person as being synonymous to " The multilayered tape of any one of embodiments 1, 2, 3, 4 and 5". Further, it is explicitly noted that the following set of embodiments is not the set of claims determining the extent of protection, but represents a suitably structured part of the description directed to general and preferred aspects of the present invention.
1. A multilayered tape, comprising at least a layer sequence:
   (a₁) a blowing agent-containing adhesive layer;
   (b₁) a laser-translucent adhesive layer;
   (c) a laser-debondable layer comprising a laser-sensitive material selected from the group consisting of a metal, a metal oxide, carbon black and a radiation-curable lacquer; and
   (b₂) a laser-translucent adhesive layer.
2. The multilayered tape of embodiment 1, comprising at least a layer sequence:
   (a₁) a blowing agent-containing adhesive layer;
   (b₁) a laser-translucent adhesive layer;
   (c) a laser-debondable layer comprising a laser-sensitive material selected from the group consisting of a metal, a metal oxide, carbon black and a radiation-curable lacquer;
   (b₂) a laser-translucent adhesive layer; and
   (a₂) a blowing agent containing adhesive layer.
3. The multilayered tape of embodiment 1 or 2, wherein the blowing agent-containing adhesive layer according to (a₁) and/or (a₂) comprises a polymer compound, preferably wherein the polymer compound is selected from the group consisting of poly(meth)acrylate, polyurethane, natural rubber, synthetic rubber and silicone, preferably poly(meth)acrylate and polyurethane, more preferably poly(meth)acrylate.
4. The multilayered tape of any one of embodiments 1 to 3, wherein the blowing agent-containing adhesive layer according to (a₁) and/or (a₂) is obtainable or obtained by crosslinking a (meth)acrylate with an acrylamide, preferably by crosslinking a n-butyl acrylate with a N-vinylcaprolactam.
5. The multilayered tape of any one of embodiments 1 to 4, wherein the blowing agent-containing adhesive layer according to (a₁) and/or (a₂) comprises a blowing agent, preferably wherein the blowing agent is selected from the group consisting of a diazene compound, preferably azodicarbonamide; a hydrazine compound, preferably p-toluenesulfonyl hydrazide and 4,4'-oxybis(benzenesulfonylhydrazid); a sulfonyl semicarbazide compound, preferably p-toluenesulfonyl semicarbazide; a tetrazole compound, preferably 5-phenyl-1H-tetrazole; a carbonate compound, preferably sodium hydrogencarbonate and zinc carbonate and a microsphere, preferably a heat-expandable microsphere.
6. The multilayered tape of any one of embodiments 1 to 5, wherein the laser-translucent adhesive layer according to (b₁) and/or (b₂) comprises a pressure sensitive adhesive composition, preferably wherein the laser-translucent adhesive layer according to (b₁) and/or (b₂) comprises at least 40 weight-% of a poly(meth)acrylate based on 100 weight-% of the pressure sensitive adhesive composition.
7. The multilayered tape of any one of embodiments 1 to 6, wherein the laser-translucent adhesive layer according to (b₁) and/or (b₂) comprises a heat-activated adhesive composition.
8. The multilayered tape of embodiment 7, wherein the heat-activated adhesive composition comprises 30 to 75 weight-% epoxy resin and 25 to 70 weight-% nitrile rubber based on 100 weight-% of the heat-activated adhesive composition.
9. The multilayered tape of embodiment 8, wherein the epoxy resin is selected from the group consisting of epichlorohydrin and glycidyl ester.
10. The multilayered tape of embodiment 7, wherein the heat-activated adhesive composition comprises 20 to 70 weight-% phenolic resin and 30 to 80 weigh-% nitrile rubber based on 100 weight-% of the heat-activated adhesive composition.
11. The multilayered tape of embodiment 10, wherein the phenolic resin comprises phenol and formaldehyde.
12. The multilayered tape of any one of embodiment 1 to 11, wherein the laser-sensitive material comprises a metal, preferably wherein the metal is selected from the group consisting of Al, Cu, Ag, Au, Pt, Pd, Zn, Cr and Ti, preferably Al, Cu and Ti, more preferably Al.
13. The multilayered tape of any one of embodiments 1 to 11, wherein the laser-sensitive material comprises a metal oxide, preferably wherein the metal oxide is selected from the group consisting of silicon dioxide, titanium dioxide and tin-zinc oxide, preferably titanium dioxide.
14. The multilayered tape of any one of embodiments 1 to 11, wherein the laser-sensitive material comprises carbon black.
15. The multilayered tape of any one of embodiments 1 to 11, wherein laser-sensitive material comprises a radiation-curable lacquer, preferably wherein the radiation-curable lacquer comprises a urethane acrylate.
16. The multilayered tape of embodiment 15, wherein the urethane acrylate comprises a di- or higher-functional urethane acrylate oligomer, more preferably the di- or higher-functional urethane acrylate oligomer comprises
   (I) 40 to 90 weight-% of a di- or higher-functional urethane acrylate oligomer A;
   (II) 5 to 20 weight-% of a di- or higher-functional acrylic monomer B; and
   (III) 5 to 20 weight-% of a di-functional ethylene glycol monomer C.
17. The multilayered tape of embodiment 16, wherein the di- or higher-functional urethane acrylate oligomer A comprises a polyurethane tri(meth)acrylate.
18. The multilayered tape of embodiment 16, wherein the di- or higher-functional acrylic monomer B is selected from the group consisting of a propoxylated glycerol tri(meth)acrylate, an ethoxylated glycerol tri(meth)acrylate, a propoxylated glycerol trimethylolpropane(meth)acrylate and an ethoxylated glycerol trimethylolpropane(meth)acrylate.
19. The multilayered tape of embodiment 16, wherein the di-functional ethylene glycol monomer C is selected from the group consisting of an ethylene glycol diacrylate and a propylene glycol diacrylate, preferably the di-functional triethylene glycol monomer C comprises triethylene glycol diacrylate.
20. The multilayered tape of any one of embodiments 1 to 19, wherein the laser-debondable layer according to (c) has a thickness in the rage of from 10 nm to 100 µm.
21. The multilayered tape of any one of embodiments 1 to 20, wherein the laser-debondable layer according to (c) has a thickness in the rage of from 0.5 to 100 µm, preferably in the rage of from 1 to 30 µm, more preferably in the rage of from 2 to 25 µm.
22. The multilayered tape of any one of embodiments 1 to 20, wherein the laser-debondable layer according to (c) has a thickness in the rage of from 10 to 1000 nm, preferably in the rage of from 10 to 100 nm, more preferably 20 to 100 nm.
23. The multilayered tape of any one of embodiments 1 to 22, comprising at least a layer sequence:
   (a₁) a blowing agent-containing adhesive layer;
   (b₁) a laser-translucent adhesive layer;
   (d₁) a laser-translucent intermediate layer;
   (c) a laser-debondable layer comprising a laser-sensitive material selected from the group consisting of a metal, a metal oxide, carbon black and a radiation-curable lacquer; and
   (b₂) a laser-translucent adhesive layer.
24. The multilayered tape of any one of embodiments 1 to 23, comprising at least a layer sequence:
   (a₁) a blowing agent-containing adhesive layer;
   (b₁) a laser-translucent adhesive layer;
   (d₁) a laser-translucent intermediate layer;
   (c) a laser-debondable layer comprising a laser-sensitive material selected from the group consisting of a metal, a metal oxide, carbon black and a radiation-curable lacquer;
   (d₂) a laser-translucent intermediate layer; and
   (b₂) a laser-translucent adhesive layer.
25. The multilayered tape of any one of embodiments 1 to 24, comprising at least a layer sequence:
   (a₁) a blowing agent-containing adhesive layer;
   (b₁) a laser-translucent adhesive layer;
   (d₁) a laser-translucent intermediate layer;
   (c) a laser-debondable layer comprising a laser-sensitive material selected from the group consisting of a metal, a metal oxide, carbon black and a radiation-curable lacquer;
   (b₂) a laser-translucent adhesive layer; and
   (a₂) a blowing agent-containing adhesive layer.
26. The multilayered tape of any one of embodiments 1 to 26, comprising at least a layer sequence:
   (a₁) a blowing agent-containing adhesive layer;
   (b₁) a laser-translucent adhesive layer;
   (d₁) a laser-translucent intermediate layer;
   (c) a laser-debondable layer comprising a laser-sensitive material selected from the group consisting of a metal, a metal oxide, carbon black and a radiation-curable lacquer;
   (d₂) an intermediate layer
   (b₂) a laser-translucent adhesive layer; and
   (a₂) a blowing agent-containing adhesive layer.
27. The multilayered tape of any one of embodiments 23 to 26, wherein the laser-translucent intermediate layer according to (d₁) and/or (d₂) comprises a polymer, wherein the polymer is selected from the group consisting of polyethylene terephthalate (PET), polyethylene (PE), polyamide (PA) or polypropylene (PP), preferably polyethylene terephthalate (PET).
28. The multilayered tape of any one of embodiments 1 to 27, wherein the multilayered tape further comprises one or more release liner(s).
29. A multilayered assembly comprising the multilayered tape according to any one of embodiments 1 to 28 and one or more adherent(s).
30. The multilayered assembly of embodiment 29, wherein the one or more adherent(s) is laser-translucent.
31. A process for debonding the multilayered tape according to any one of embodiments 1 to 28, said process comprising
   - subjecting the multilayered assembly according to embodiment 29 or 30 to a temperature in the range of 40 to 200 °C for a period in the range of from 1 to 100 min; and/or
   - subjecting the multilayered assembly according to embodiment 29 or 30 to a laser for a period in the range of from 0.1 s to 10 min; and
   - separating the multilayered tape from the one or more adherent(s).
32. The process of embodiment 31, wherein the debonding comprises effecting an expansion of the blowing agent-containing adhesive layer according to (a₁) and/or (a₂).
33. The process of embodiment 31 or 32, wherein the debonding comprises subjecting the blowing agent-containing adhesive layer according to (a₁) and/or (a₂) to a laser, heat or plasma.
34. The process of embodiment 31, wherein the debonding comprises effecting an oxidation and/or sublimation of the laser-debondable layer according to (c).
35. The process of embodiment 31, wherein the laser is an infrared laser, preferably wherein the laser exhibits a light having a wavelength in the range of 750 nm to 1400 nm.
36. Use of the multilayered tape of any one of embodiments 1 to 28 in electronic devices, automotive devices, medical devices and dentistry devices.

### DESCRIPTION OF THE FIGURES

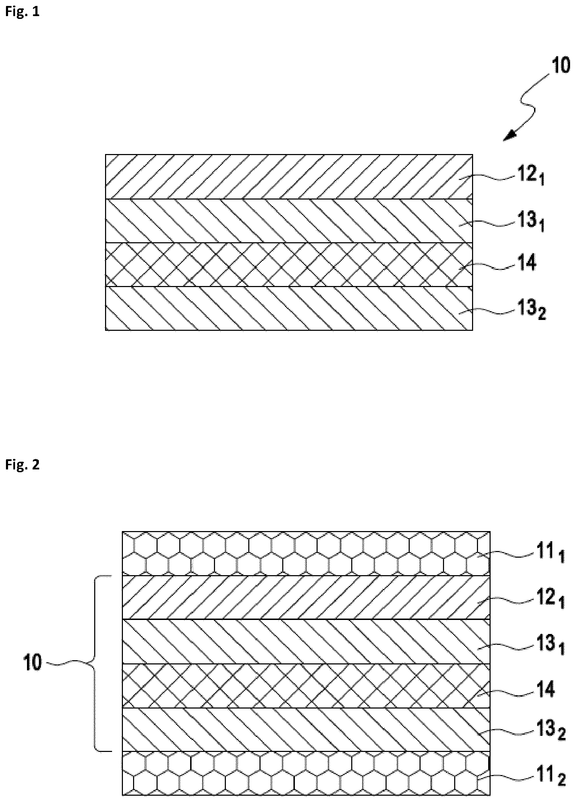

- Figure 1: displays a multilayered tape (10) according to the present invention comprising the following layer sequence: a blowing agent-containing adhesive layer (12₁); a laser-translucent adhesive layer (13₁); a laser-debondable layer (14); and a laser-translucent adhesive layer (13₂).
- Figure 2: displays a multilayered assembly comprising the multilayered tape according to the present invention between two adherents (11₁) and (11₂) comprising the following sequence: an adherent (11₁); a blowing agent-containing adhesive layer (12₁); a laser-translucent adhesive layer (13₁); a laser-debondable layer (14); a laser-translucent adhesive layer (13₂); and an adherent (11₂).

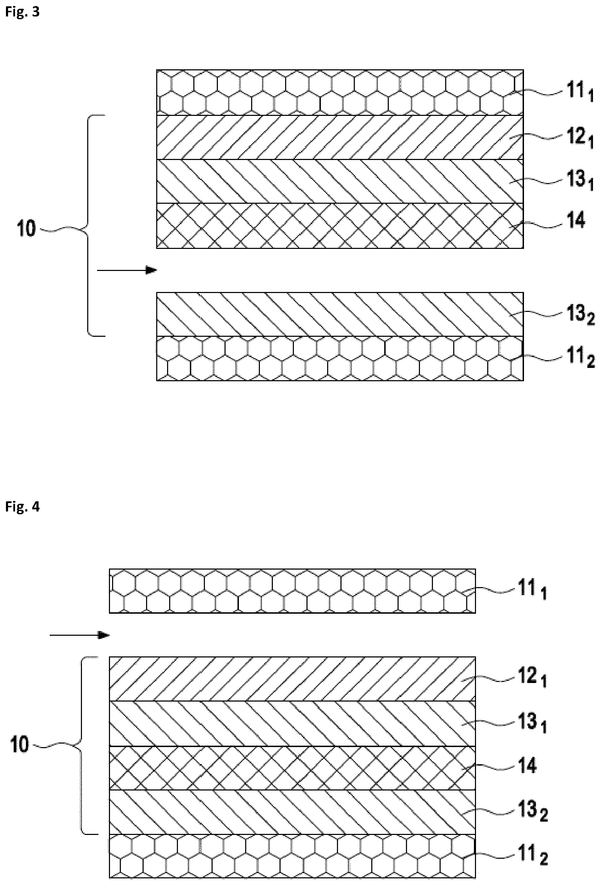

- Figure 3: displays the process for debonding the multilayered tape (10) according to the present invention comprising subjecting the multilayered assembly to a laser, thereby debonding the multilayered tape from the adherent at the surface of the laser-debondable layer (14).
- Figure 4: displays the process for debonding the multilayered tape (10) according to the present invention, comprising subjecting the multilayered assembly according to the present invention to a laser and/or heating thereby debonding the multilayered tape from the adherent at the surface of the blowing agent-containing adhesive layer (12₁).

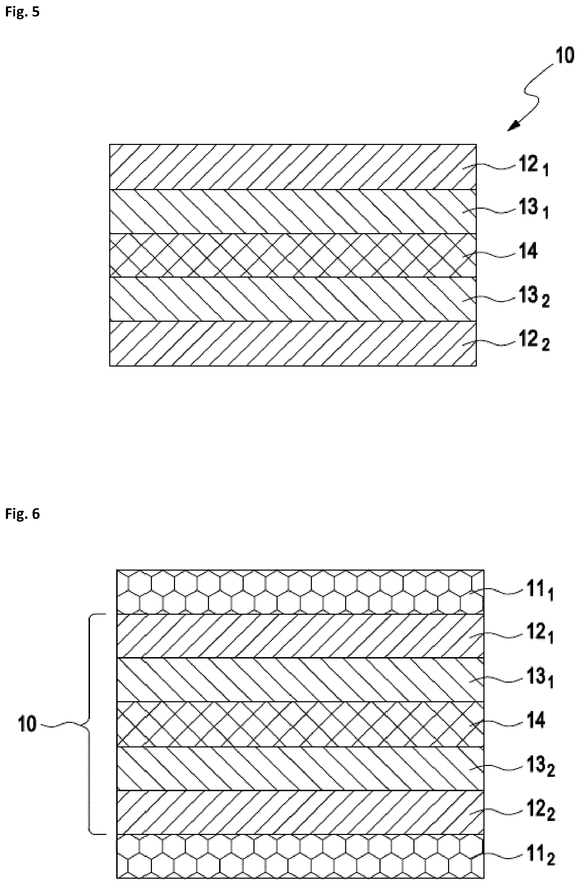

- Figure 5: displays a multilayered tape (10) according to the present invention comprising the following layer sequence: a blowing agent-containing adhesive layer (12₁); a laser-translucent adhesive layer (13₁); a laser-debondable layer (14); a laser-translucent adhesive layer (13₂); and a blowing agent-containing adhesive layer (12₂).
- Figure 6: displays a multilayered assembly comprising the multilayered tape (10) according to the present invention between two adherents (11₁) and (11₂) comprising the following sequence: an adherent (11₁); a blowing agent-containing adhesive layer (12₁); a laser-translucent adhesive layer (13₁); a laser-debondable layer (14); a laser-translucent adhesive layer (13₂); a blowing agent-containing adhesive layer (12₂) and an adherent (11₂).

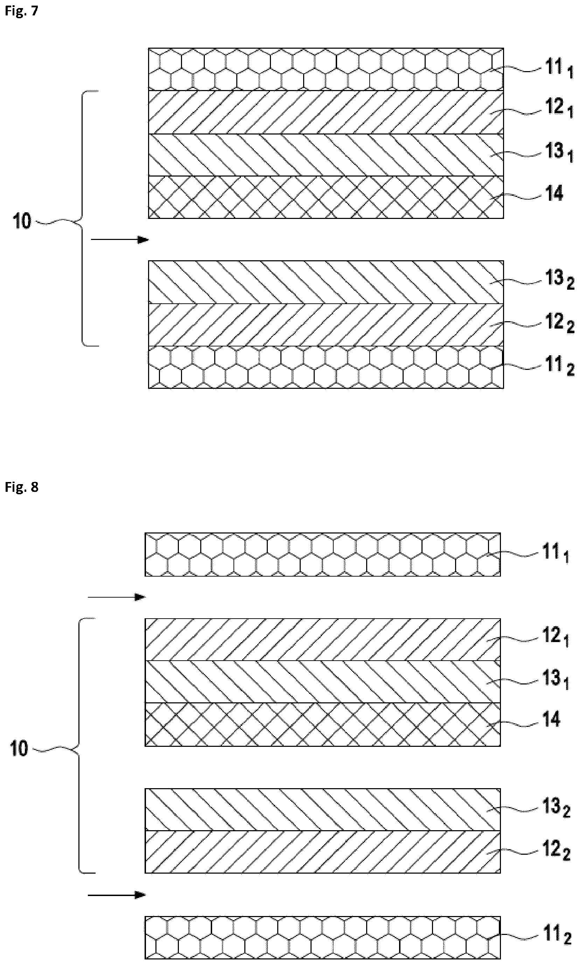

- Figure 7: displays the process for debonding the multilayered tape (10) according to the present invention comprising subjecting the multilayered assembly to a laser, thereby debonding the multilayered tape from the adherent at the surface of the laser-debondable layer (14).
- Figure 8: displays the process for debonding the multilayered tape (10) according to the present invention, comprising subjecting the multilayered assembly according to the present invention to a laser and/or heating thereby debonding the multilayered tape from the adherent at the surface of the blowing agent-containing adhesive layer (12₁) and (12₂) and debonding the multilayered tape from the adherent at the surface of the laser-debondable layer (14).

### EXPERIMENTAL SECTION

The present invention is further illustrated by the following examples.

### Example:

The multilayered tape according to the present invention was subjected to (1) a debonding process at the laser-debondable layer by a 10 s laser activation. After debonding at the laser-debondable layer, bonding strength level in terms of push-out set-up drop to 10-15 % of the original strength was observed for both, the pressure sensitive adhesive composition (PSA, tesa^{®} 75120, a double-sided black tape consisting of a high shock absorbing black acrylic foam) and the heat-activated adhesive composition (HAF, tesa HAF^{®} 8474, a reactive heat activated structural bonding film based on phenolic resin and nitrile rubber, without backing and protected by a strong paper liner). Then, the multilayered tape according to the present invention was subjected to (2) a further debonding process by one of activation methods according to the present invention (laser, heat or plasma activation) at the blowing agent-containing adhesive layer, where the substrate can be easily separated by hand, especially for a multilayered tape comprising a heat-activated adhesive composition (HAF).

| a multilayered tape comprising | Push-out (N) before debonding | Push-out (N) after debonding (1) | Hand separation after further debonding (2) |
|---|---|---|---|
| HAF (tesa HAF^{®} 8474) | 1190.4 | 124 | good |
| PSA (tesa^{®} 75120) | 347.2 | 49.6 | good |

### Reference Example: Push out test

The push-out test was performed according to DE102016207550A1. The multilayered tape according to the present invention was placed on an inked glass. Die cuts of the d/s tapes are used to create five test pieces by adhering a polycarbonate frame with a polycarbonate lens together. If required additional substrate materials for frame and lens can be used.

The d/s tape is laminated onto the liner. The outer diameter is 33 mm and the inner diameter is 29 mm (die-cut area is 248 mm²). The outer and inner squares are cut with a kiss cut. A perforation square with a length of 35 mm should be included to position the sample better into the template. PC frames and lenses are cleaned with Ethanol und dried in a fume hood for at least two hours.

After 24 hrs storage in a climate room (23 ± 1°C, 50 ± 5 % rel. humidity) the maximal force and energy required to push the window off the frame with a thickness of 3 mm by a punch is determined with a tensile tester. The maximal force in N and energy in mJ are measured and stated as the results "push out force" and "push out energy". Result of a single measurement is the maximal force, energy and detachment displayed by the tensile tester software. Final result is the average of the five single results for maximal force and de-bonding energy

### Cited prior art:

- C. Sato, in Recyicling and environmental aspects, 2011, 58, pages 1506-1526
- WO 2013/174650 A1
- WO 2010/245945 A1
- DE 102020209557 A1
- DE 102016207550 A1

## Claims

1. A multilayered tape, comprising at least a layer sequence:
(a₁) a blowing agent-containing adhesive layer;
(b₁) a laser-translucent adhesive layer;
(c) a laser-debondable layer comprising a laser-sensitive material selected from the group consisting of a metal, a metal oxide, carbon black and a radiation-curable lacquer; and
(b₂) a laser-translucent adhesive layer.

2. The multilayered tape of claim 1, comprising at least a layer sequence:
(a₁) a blowing agent-containing adhesive layer;
(b₁) a laser-translucent adhesive layer;
(c) a laser-debondable layer comprising a laser-sensitive material selected from the group consisting of a metal, a metal oxide, carbon black and a radiation-curable lacquer;
(b₂) a laser-translucent adhesive layer; and
(a₂) a blowing agent containing adhesive layer.

3. The multilayered tape of claim 1 or 2, wherein the blowing agent-containing adhesive layer according to (a₁) and/or (a₂) comprises a polymer compound, preferably wherein the polymer compound is selected from the group consisting of poly(meth)acrylate, polyurethane, natural rubber, synthetic rubber and silicone, preferably poly(meth)acrylate and polyurethane, more preferably poly(meth)acrylate.

4. The multilayered tape of any one of claim 1 to 3, wherein the blowing agent-containing adhesive layer according to (a₁) and/or (a₂) comprises a blowing agent, preferably wherein the blowing agent is selected from the group consisting of a diazene compound, preferably azodicarbonamide; a hydrazine compound, preferably p-toluenesulfonyl hydrazide and 4,4'-oxybis(benzenesulfonylhydrazid); a sulfonyl semicarbazide compound, preferably p-toluenesulfonyl semicarbazide; a tetrazole compound, preferably 5-phenyl-1H-tetrazole; a carbonate compound, preferably sodium hydrogencarbonate and zinc carbonate and a microsphere, preferably a heat-expandable microsphere.

5. The multilayered tape of any one of claims 1 to 4, wherein the laser-translucent adhesive layer according to (b₁) and/or (b₂) comprises a pressure sensitive adhesive composition, preferably wherein the laser-translucent adhesive layer according to (b₁) and/or (b₂) comprises at least 40 weight-% of a poly(meth)acrylate based on 100 weight-% of the pressure sensitive adhesive composition.

6. The multilayered tape of any one of claims 1 to 5, wherein the laser-translucent adhesive layer according to (b₁) and/or (b₂) comprises a heat-activated adhesive composition.

7. The multilayered tape of claim 6, wherein the heat-activated adhesive composition comprises 30 to 75 weight-% epoxy resin and 25 to 70 weight-% nitrile rubber based on 100 weight-% of the heat-activated adhesive composition.

8. The multilayered tape of claim 6, wherein the heat-activated adhesive composition comprises 20 to 70 weight-% phenolic resin and 30 to 80 weigh-% nitrile rubber based on 100 weight-% of the heat-activated adhesive composition.

9. The multilayered tape of any one of claims 1 to 8, wherein the laser-sensitive material comprises a metal, preferably wherein the metal is selected from the group consisting of Al, Cu, Ag, Au, Pt, Pd, Zn, Cr and Ti, preferably Al, Cu and Ti, more preferably Al.

10. The multilayered tape of any one of claims 1 to 8, wherein the laser-sensitive material comprises a metal oxide, preferably wherein the metal oxide is selected from the group consisting of silicon dioxide, titanium dioxide and tin-zinc oxide, preferably titanium dioxide.

11. The multilayered tape of any one of claims 1 to 8, wherein the laser-sensitive material comprises carbon black.

12. The multilayered tape of any one of claims 1 to 8, wherein laser-sensitive material comprises a radiation-curable lacquer, preferably wherein the radiation-curable lacquer comprises a urethane acrylate.

13. The multilayered tape of any one of claims 1 to 12, wherein the laser-debondable layer according to (c) has a thickness in the rage of from 10 nm to 100 µm.

14. A multilayered assembly comprising the multilayered tape according to any one of claims 1 to 13 and one or more adherent(s).

15. A process for debonding the multilayered tape according to any one of claims 1 to 13, said process comprising
- subjecting the multilayered assembly according to claim 14 to a temperature in the range of 40 to 200 °C for a period in the range of from 1 to 100 min; and/or
- subjecting the multilayered assembly according to claim 14 to a laser for a period in the range of from 0.1 s to 10 min; and
- separating the multilayered tape from the one or more adherent(s).

16. Use of the multilayered tape of any one of claims 1 to 13 in electronic devices, automotive devices, medical devices and dentistry devices.
